# EUROPÄISCHE PATENTSCHRIFT

(11) **EP 1 727 607 B1**
(45) Veröffentlichungstag und Bekanntmachung des Hinweises auf die Patenterteilung: **02.04.2008**
(21) Anmeldenummer: 05715679.6
(22) Anmeldetag: 03.03.2005
(51) Int. Cl.: B01D 35/153, B01D 35/027, B01D 29/96

(54) **FILTERVORRICHTUNG**
FILTER DEVICE
DISPOSITIF DE FILTRATION

(30) Priorität: 20.03.2004 DE 102004014149
(43) Veröffentlichungstag der Anmeldung: 06.12.2006
(73) Patentinhaber: HYDAC FILTERTECHNIK GMBH, 66280 Sulzbach/Saar (DE)
(72) Erfinder: KLEIN, Volkmar, 66482 Zweibrücken (DE); DAUB, Joel, Allentown, PA 18104 (US)
(74) Vertreter: Bartels, Martin Erich Arthur
(86) Internationale Anmeldenummer: PCT/EP2005/002215
(87) Internationale Veröffentlichungsnummer: WO 2005/092472

(56) Entgegenhaltungen:
- US-A- 4 615 812
- US-A- 5 826 854
- US-A1- 2002 036 162
- US-A1- 2002 185 425

## Beschreibung

Die Erfindung bezieht sich auf eine Filtervorrichtung gemäß der Merkmalsausgestaltung des Oberbegriffes des Patentanspruches 1.

Filtervorrichtungen sind in einer Vielzahl von Bau- und Ausführungsformen auf dem Markt frei erhältlich. Sie dienen dabei unter anderem dazu, Verschmutzungen in Fluiden, wie Hydrauliköl, aus diesen heraus zu filtrieren. Verschmutzungen des Hydrauliköles erfolgen bei der Montage und bei der Inbetriebnahme der jeweiligen Hydraulikanlage, und neben dieser Anfangsverschmutzung kann es zu Verschmutzungen während des Betriebes kommen, beispielsweise durch Eindringen von Schmutz am Hydrauliktank aufgrund unzureichender Tankbelüftung, Rohrdurchführungen, Kolbenstangenabdichtungen und dergleichen mehr. Sofern es bei Hydraulikanlagen von Arbeitsmaschinen, wie Erdbewegungsmaschinen, Baggern oder dergleichen, zu Verschmutzungen innerhalb des im Hydrauliktank bevorrrateten Fluids kommt, kann es zweckmäßig sein, die Filtration unmittelbar im Bereich des Hydrauliktanks zu veranlassen, beispielsweise indem man die Filtervorrichtung direkt in den Tank einbaut, wobei das aus dem Tankinhalt entnommene Hydrauliköl zur Abfiltrierung von Verschmutzungen direkt einem Filterelement zugeführt wird, das in einem Filtergehäuse aufgenommen ist, und das derart abgereinigte Fluid dann über das Filtergehäuse wieder dem Tankinhalt zugeführt wird. Bei diesen Lösungen reinigt die Filtervorrichtung nur den Tankinhalt. Es sind aber auch Lösungen denkbar, bei denen die Filtervorrichtung entsprechend abfiltriertes und gereinigtes Fluid in einen Hydraulikkreislauf der Arbeitsmaschine fördert, um von dort das Fluid in den Tank rückzufördern, das bei einem derartigen Umlauf im Hydraulikkreis eine Verschmutzung auch mit Feststoffteilen erfährt.

Bei den Lösungen, bei denen die Filtervorrichtung nur den Tankinhalt filtriert, indem Fluid aus dem Tankinhalt entnommen, filtriert und dann gleich wieder dem Tankinhalt zugeführt wird, kann es, wenn ein Wechsel des Filterelementes durchzuführen ist, zweckmäßig sein, den Inhalt der Fluideinrichtung, insbesondere in Form des Hydrauliktanks, gegenüber dem Filtergehäuse abzusperren. Dadurch kann das Filtergehäuse mit verbrauchtem Filterelement von der Fluideinrichtung, namentlich dem Tank, vollständig abgebaut und durch ein Filtergehäuse mit einem frischen Filterelement ersetzt werden, ohne dass der Betrieb der jeweiligen Hydraulikanlage unterbrochen werden muß.

Bekannte, gattungsgemäße Lösungen von Filtervorrichtungen sind in der US-A-5 826 854 sowie in der US 2002/185425 A1 aufgezeigt, die in Zusammenhang mit einem Wechsel des Filtergehäuses konstruktiv zumindest teilweise kompliziert und in axialer Längsrichtung des Gesamtgehäuses gesehen groß aufbauen. Auch besteht die Gefahr, dass beim Abbau oder Ausbau des jeweiligen Filtergehäuses gewisse Mengen an Fluid als eine Art Leckölstrom aus dem Filtergehäuse und/oder der Fluideinrichtung austreten, was zu Verschmutzungsproblemen in der Umgebung führt. Zudem muß die Betätigung der Befestigungseinrichtung seitens der Bedienungsperson beim Abnehmen und erneuten Anbringen der Filtervorrichtung an der Fluideinrichtung mit Sorgfalt erfolgen, um einen störungsfreien Betrieb der betreffenden Fluidanlage zu gewährleisten.

Um einen ungewollten Leckölaustritt zu vermeiden, ist bei einer vergleichbaren Filtervorrichtungslösung nach der US 2002/0036162 A1 zwar bereits vorgeschlagen worden, in ein an einem Drittbauteil festgelegtes Kopfteil als Teil eines Filtergehäuses federbelastete Schließventile einzusetzen, die die Fluidzufuhr in Zu- und Ablaufleitung zum Filtergehäuse mit Filterelement entsprechend unterbinden; dennoch kann es trotz dieser sperrenden Fluidventile ungewollt zu Leckagen beim Abnehmen des sonstigen Filtergehäuses vom Kopfteil kommen, auch wenn eines der dort eingesetzten sperrenden Ventile über eine Stößelführung vom Filtergehäuse mit dem Filterelement insoweit ansteuerbar gestaltet ist und schließt, sobald das Filtergehäuse vom Kopfteil entfernt wird.

Bereits aufgrund der langen Wegführung über den Betätigungsstößel der Stößelführung und berücksichtigend, dass das weiter eingesetzte sperrende Ventil über den Differenzdruck des Fluidstroms ansteuerbar ist, sind insoweit Leckagen nicht ausgeschlossen. Auch baut die bekannte Lösung kompliziert auf und ist somit teuer in der Herstellung. Ist das weitere Gehäuseteil mit dem Filterelement abgenommen, ragt der Betätigungsstößel für das eine sperrende Ventil aus der Außenkontur des Gehäusekopfteils hervor, so dass Beschädigungen der dahingehenden Ansteuervorrichtung beim Filterelementwechsel durch einen Monteur oder eine sonstige Bedienperson nicht auszuschließen sind.

Ausgehend von diesem Stand der Technik liegt der Erfindung die Aufgabe zugrunde, eine kompakt aufbauende Filtervorrichtung zur Verfügung zu stellen, bei der die für einen Wechsel des Filterelementes durchzuführenden Maßnahmen besonders einfach und sicher durchführbar sind, so dass ein störungsfreier Betrieb der betreffenden Fluideinrichtung sichergestellt ist. Erfindungsgemäß ist diese Aufgabe durch eine Filtervorrichtung mit den Merkmalen des Patentanspruches 1 in seiner Gesamtheit gelöst.

Dadurch, dass gemäß dem kennzeichnenden Teil des Patentanspruches 1 der Drehschieber mindestens einen Anschlußstutzen aufweist, der als Bestandteil der Anschlußeinrichtung sich ins Innere des Filtergehäuses erstreckt und dessen Drehbewegung als Mitnehmer auf den Drehschieber überträgt, dass das Filtergehäuse eine Eintrittsöffnung für die Zufuhr von Fluid zur Schmutzseite und eine Austrittsöffnung für den Ausstrom gefilterten Fluids aus dem Filtergehäuse aufweist, dass der Drehschieber für jede Öffnung des Filtergehäuses einen die zuordenbare Öffnung durchgreifenden Anschlußstutzen aufweist, dass das Filtergehäuse an Eintrittsöffnung und Austrittsöffnung je ein mittels einer Schließfeder in die Schließstellung vorgespanntes, den Fluidaustritt aus dem Filtergehäuse in der Schließstellung sperrendes Ventil aufweist, und dass jeder Anschlußstutzen des Drehschiebers endseits mindestens eine ins Innere des Filtergehäuses axial vorspringende Steuernase aufweist, die beim Anbringen des Filtergehäuses an der Fluideinrichtung am Sperrkörper des zugeordneten Ventils anläuft und dieses gegen die Schließkraft aus der Schließstellung in die Offenstellung drängt, läßt sich ein Filterwechsel mit einem Höchstmaß an Sicherheit und auf besonders einfache und bequeme Weise durchführen. Dies wird dadurch erreicht, das Sperren und Freigeben der Fluidanschlüsse selbständig bei Abbau und Anbau des Filtergehäuses über ein jeweils sperrendes Ventil erfolgt, was wiederum auf besonders einfache und bequeme Weise durch Lösen und Verriegeln des Bajonettverschlusses erfolgt.

Aufgrund der Benutzung des Bajonettverschlusses als Befestigungseinrichtung und des selbsttätigen Sperrens der Fluidanschlüsse beim Lösen des Bajonettverschlusses mittels der genannten Ventile lassen sich die gesamten Betätigungsvorgänge in Zusammenhang mit dem Auswechseln eines verbrauchten Filterelementes in wenigen Sekunden ausführen, da das das verbrauchte Filterelement enthaltende Filtergehäuse durch Lösen des Bajonettverschlusses von der Fluideinrichtung als Ganzes abgenommen werden kann, ohne dass gesonderte Maßnahmen an den Fluidanschlüssen der Fluideinrichtung durchgeführt werden müßten. Ebenso gestaltet sich das Anbringen eines ein unverbrauchtes Filterelement enthaltenden Filtergehäuses durch Verriegeln des Bajonettverschlusses entsprechend kurzzeitig, weil durch den Verriegelungsvorgang selbsttätig die Fluidanschlüsse freigegeben werden.

Aufgrund des als Sperrteil ausgebildeten Drehschiebers, der an der Fluideinrichtung entsprechend drehbar gelagert ist, ist eine besonders einfache und kompakte Bauweise erreicht und die bei der Betätigung des Bajonettverschlusses erfolgenden Drehbewegungen sind besonders einfach in entsprechende Rotations-Steuerbewegungen des Drehschiebers umgesetzt. Durch die an den Fluidanschlüssen der Fluideinrichtung vorgesehenen, vorspringenden Steuernasen sind die federbelasteten Sperrkörper der Ventile selbsttätig gegen die Schließkraft in die Offenstellung bewegbar, wenn das Filtergehäuse an die Fluideinrichtung (namentlich den Tank) angebaut wird. Bei Abnehmen des Filtergehäuses von der Fluideinrichtung werden dann die Öffnungen des Filtergehäuses selbsttätig gesperrt, ohne dass Vorkehrungen gegen ein unbeabsichtigtes Austreten von Fluid aus dem Filtergehäuse getroffen werden müßten. Das Filtergehäuse mit Filterelement kann dann an eine andere Örtlichkeit verbracht werden, um an einer anderen Stelle den Filterelementwechsel zu veranlassen, wobei dann noch weitere Wartungshandlungen bei Bedarf vorgenommen werden können.

Weitere vorteilhafte Ausführungsformen der erfindungsgemäßen Filtervorrichtung sind Gegenstand der sonstigen Unteransprüche.

Nachstehend ist die Erfindung anhand eines in der Zeichnung dargestellten Ausführungsbeispieles im einzelnen erläutert. Es zeigen:
- Fig. 1 einen Längsschnitt eines Hydrauliktanks mit in ein Tankabteil eingebauter Filtervorrichtung gemäß einem Ausführungsbeispiel der Erfindung, wobei sich die Filtervorrichtung im Betriebszustand befindet;
- Fig. 2 eine Draufsicht des Hydrauliktanks von Fig. 1;
- Fig. 3 einen der Fig. 1 ähnlichen Schnitt, wobei ein den Zugang zum Tankabteil ermöglichender Tankdeckel geöffnet ist und die Filtervorrichtung für das Herausnehmen aus dem oder das Einbauen in das Tankabteil in einer Drehstellung gezeigt ist, die gegenüber Fig. 1 um 90° verdreht ist;
- Fig. 4 eine Draufsicht auf den den geöffneten Tankdeckel aufweisenden Tank von Fig. 3;
- Fig. 5 einen gegenüber Fig. 1 - 4 in größerem Maßstab gezeichneten Ausschnitt des in Fig. 1 mit I bezeichneten Bereiches und
- Fig. 6 eine perspektivische Darstellung der Anschlußplatte einer Fluideinrichtung (Hydrauliktank) mit zugeordnetem Ausführungsbeispiel der Filtervorrichtung, wobei das Filtergehäuse bei gelöster Befestigungseinrichtung von der Anschlußplatte abgebaut ist.

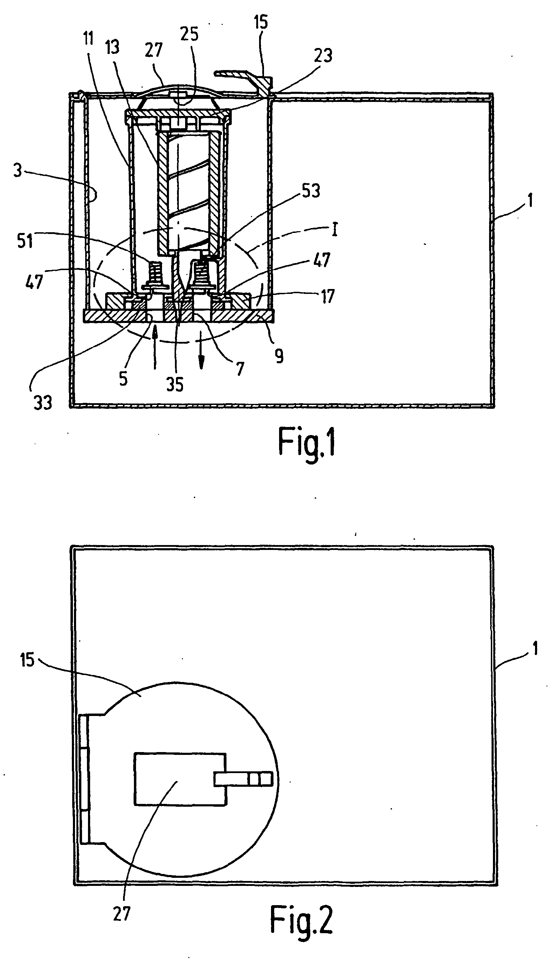

Die Fig. 1 bis 4 zeigen eine Fluideinrichtung in Form eines Hydrauliktanks 1 mit einem in diesen eingebauten, gesonderten Tankabteil 3, das mit dem übrigen Tankinhalt lediglich über Fluidanschlüsse 5 und 7 verbindbar ist, ansonsten jedoch gegenüber dem übrigen Tankinhalt abgeschlossen ist. Die Fluidanschlüsse 5 und 7 befinden sich am bodenseitigen Abschluß des Tankabteils 3, der durch eine ebene Anschlußplatte 9 gebildet ist. Die Anschlußplatte 9 bildet den Träger für das an ihr mittels einer lösbaren Befestigungseinrichtung anbringbare Filtergehäuse 11 der erfindungsgemäßen Filtervorrichtung. Bei an der Anschlußplatte 9 angebrachtem, in Betriebsstellung befindlichem Filtergehäuse 11 bildet der Fluidanschluß 5 den Einlaß für die Zufuhr von zu reinigendem Fluid zur Schmutzseite im Innenraum des Filtergehäuses 11, während der Ausstrom gereinigten Fluids, nachdem es das Filterelement 13 im Filtergehäuse passiert hat, durch den Fluidanschluß 7 hindurch erfolgt.

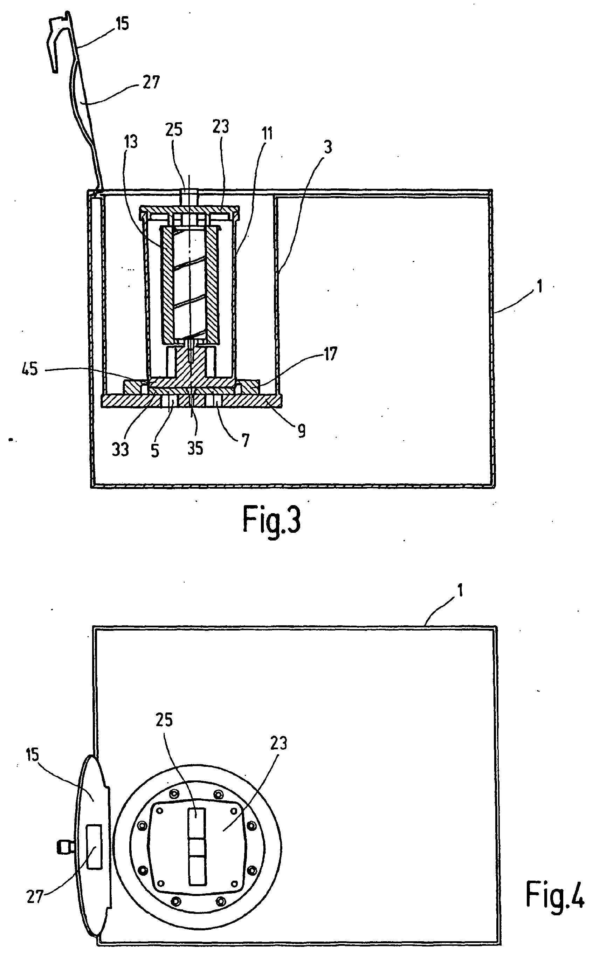

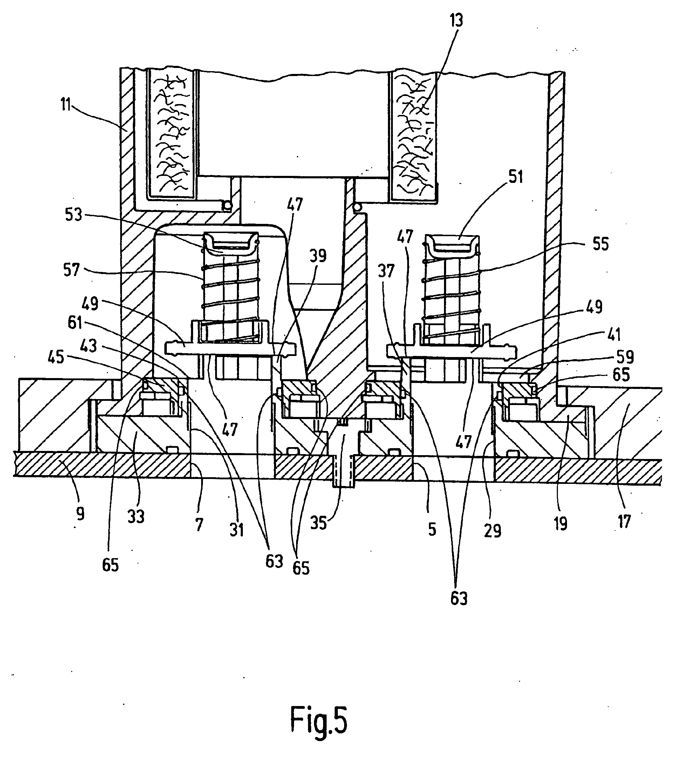

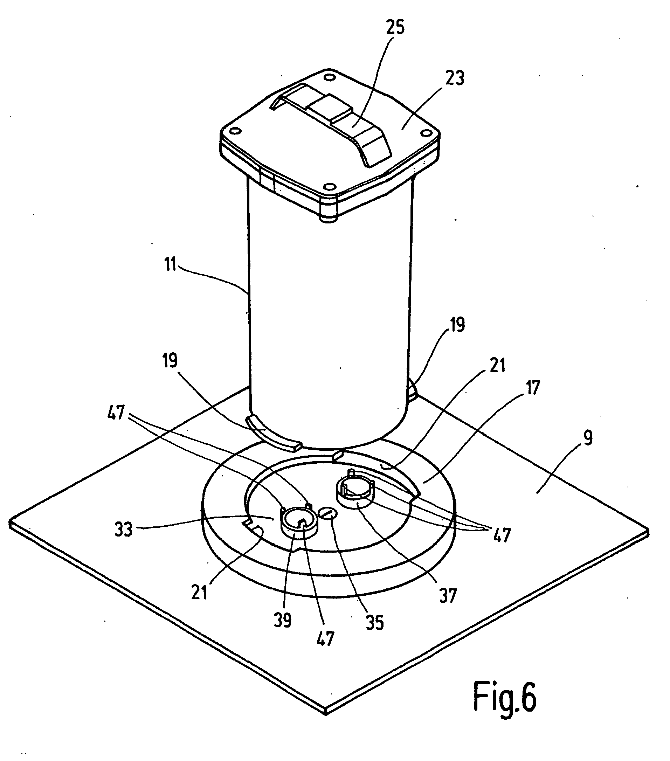

Die Fig. 1 und 2 zeigen einen Betriebszustand, bei dem die Filtervorrichtung bei geschlossenem Tankdeckel 15 in das Tankabteil 3 eingebaut ist und sich das Filtergehäuse 11 in der dem Betriebszustand der Vorrichtung entsprechenden Position befindet. Dieser Betriebszustand ist in Fig. 5 deutlicher dargestellt. Wie ersichtlich ist, ist das Filtergehäuse 11 mit der Anschlußplatte 9 mittels eines Bajonettverschlusses verriegelt, der einen an der Anschlußplatte 9 befestigten Bajonettring 17 (siehe auch Fig. 6) aufweist, der mit am zugeordneten Endrand des Filtergehäuses radial vorspringenden, zueinander diametral gelegenen Bajonettrippen19 (Fig. 5 und 6) zusammenwirkt. In der in Fig. 6 dargestellten Drehstellung des Filtergehäuses 11 sind die Bajonettrippen 19 über Ausnehmungen 21 (Fig. 6) in die Bajonettführung des Bajonettringes 17 einführbar. Durch Verdrehen des Filtergehäuses 11 aus der in Fig. 6 gezeigten Drehposition um 90 Winkelgrad ist das Filtergehäuse 11 mittels des Bajonettverschlusses 17, 19 an der Anschlußplatte 9 verriegelt. Diese dem Betriebszustand der Filtervorrichtung entsprechende Drehstellung ist in Fig. 1 und 5 gezeigt, während Fig. 3 und 6 die Drehposition zeigt, in der bei gelöstem Bajonettverschluß das Filtergehäuse 11 von der Anschlußplatte 9 abhebbar ist. Das Filtergehäuse 11 ist endseitig durch einen Deckelteil 23 abgeschlossen, von dem sich eine für das manuelle Verdrehen des Filtergehäuses 11 vorgesehene Handhabe 25 axial vom Deckelteil 23 (in der Zeichnung nach oben) weg erstreckt. Wie der Vergleich der Fig. 1 und 3 zeigt, ist durch den axialen Überstand der Handhabe 25 das Schließen des Tankdeckels 15 nur in der dem Betriebszustand bei verriegeltem Bajonettverschluß entsprechenden Drehstellung des Filtergehäuses 11 möglich, nämlich wenn sich der vorstehende Abschnitt der Handhabe 25 längs einer gewölbten Einbuchtung 27 im Tankdeckel 15 erstreckt. Befindet sich andererseits das Filtergehäuse 11 in der in Fig. 3 gezeigten Drehposition, wo sich der vorstehende Abschnitt der Handhabe 25 quer zur Einbuchtung 27 erstreckt und sich der Tankdeckel 15 demgemäß nicht ganz schließen läßt, dann wird der Bedienungsperson sinnfällig signalisiert, dass das Filtergehäuse nicht mittels des Bajonettverschlusses einwandfrei verriegelt ist und sich die Filtervorrichtung daher nicht in ihrem Betriebszustand befindet.

Wie am deutlichsten aus Fig. 5 zu entnehmen ist, sind bei diesem Betriebszustand Durchlässe 29 und 31 eines Drehschiebers 33 mit den Fluidanschlüssen 5 bzw. 7 fluchtend. Der Drehschieber 33 ist auf dem Zapfen einer in die Anschlußplatte 9 eingeschraubten Bundschraube 35 drehbar gelagert. Der Drehschieber 33 weist die Durchlässe 29 und 31 ins Innere des Filtergehäuses 11 hinein fortsetzende Anschlußstutzen 37 und 39 auf, die eine Eintrittsöffnung 49 des Filtergehäuses 11 und eine Austrittsöffnung 43 des Filtergehäuses 11 durchgreifen. Die Eintrittsöffnung 41, durch die ungereinigtes Fluid ins Filtergehäuse 11 eintritt, und die Austrittsöffnung 43, durch die gereinigtes Fluid aus dem Filtergehäuse 11 austritt, befinden sich in einem Bodenteil 45 des Filtergehäuses 11. Das Bodenteil 45 ist gegenüber den Anschlußstutzen 37, 39 durch in Ringnuten 63 sitzende O-Ringe (nicht gezeigt) und gegenüber der umgebenden Wand des Filtergehäuses 11 durch in Ringnuten 65 sitzende O-Ringe (nicht gezeigt) abgedichtet.

Wird das Filtergehäuse 11 aus der in Fig. 1 und 5 gezeigten Betriebsstellung verdreht, dann nimmt das sich drehende Bodenteil 45 die als Rotationsmitnehmer wirkenden Anschlußstutzen 37 und 39 des Drehschiebers 33 mit, so dass dieser verdreht wird und seine Durchlässe 29, 31 mit den Fluidanschlüssen 5 und 7 außer Fluchtung kommen. Wenn die in Fig. 3 gezeigte Drehstellung des Drehschiebers 33 erreicht ist, sind die Fluidanschlüsse 5 und 7 durch den Drehschieber 33 verschlossen. In dieser gegenüber Fig. 1 und 5 um 90° verdrehten Position, die in Fig. 6 angedeutet ist, ist der Bajonettverschluß 17, 19 freigegeben, so dass das Filtergehäuse 11 abgehoben werden kann. Während bei der in Fig. 1 und 5 gezeigten Betriebsstellung Steuernasen 47, die am Ende der Anschlußstutzen 37 und 39 ins Innere des Filtergehäuses 11 vorspringen, die Sperrkörper 49 von Sperrventilen 51 und 53 gegen die Schließkraft zugeordneter Schließfedern 55 bzw. 57 offen hielten, werden durch das Abheben des Filtergehäuses 11 nun die Sperrkörper 49 durch die Schließfedern 55, 57 an Ventilsitze 59 bzw. 61 angelegt, um Eintrittsöffnung 41 und Austrittsöffnung 43 des Ventilgehäuses 11 zu verschließen.

Somit ist das Filtergehäuse 11, wenn es von der Anschlußplatte 9 abgebaut ist, gegen ein Austreten von Fluid gesichert, so dass das Filtergehäuse 11, ohne Gefahr einer Umweltverschmutzung durch austretende Leckflüssigkeit, gefahrlos zum Austausch des Filterelements oder anderer Wartung transportiert werden kann. Wird ein ein unverbrauchtes Filterelement 13 enthaltendes Filtergehäuse 11 an die Anschlußplatte 9 heran bewegt, so dass die Bajonettrippen 19 durch die Ausnehmungen 21 in die Bajonettführung des Bajonettringes 17 eintreten, dann durchgreifen die Anschlußstutzen 37, 39 des Drehschiebers 33 die Eintrittsöffnung 41 bzw. die Austrittsöffnung 43 des ventilgehäuses, so dass die vorstehenden Steuernasen 47 die Sperrkörper 49 der Ventile 51 und 53 entsperren. Wird sodann das Filtergehäuse 11 zum Verriegeln des Bajonettverschlusses um 90° verdreht, erreicht der Drehschieber 33 die in Fig. 1 und 5 gezeigte Drehposition, so dass im Zuge des Befestigens des Filtergehäuses 11 an der Anschlußplatte 9 selbsttätig die Fluidverbindung zum Tankinhalt hergestellt wird. Andererseits wird, wenn das Filtergehäuse zum Lösen des Bajonettverschlusses um 90° verdreht wird, selbsttätig die Fluidverbindung mit dem Tankinhalt gesperrt, wenn der Drehschieber 33 die in Fig. 3 gezeigte Stellung einnimmt.

## Patentansprüche

1. Filtervorrichtung mit mindestens einem Filterelement (13), das in einem Filtergehäuse (11) aufnehmbar ist, das über Fluidanschlüsse (5, 7) mit einer Fluideinrichtung, insbesondere in Form eines Hydrauliktanks (1), mittels einer Anschlußeinrichtung (9) fluidführend verbindbar und an der Fluideinrichtung mittels einer Befestigungseinrichtung (17, 19) lösbar anbringbar ist, wobei als Befestigungseinrichtung ein durch Verdrehen des Filtergehäuses (11) verriegelbarer und lösbarer Bajonettverschluß (17, 19) vorgesehen ist, wobei die Anschlußeinrichtung (9) mit mindestens einem bewegbaren Sperrteil (33) versehen ist, das in einer Sperrstellung den ihm jeweils zuordenbaren Fluidanschluß (5, 7) sperrt und nach Bewegen in eine Öffnungsstellung diesen freigibt, wobei das Sperrteil (33) durch zum Lösen und Verriegeln des Bajonettverschlusses (17, 19) durchgeführte Drehbewegungen des Filtergehäuses (11) in die Sperrstellung bzw. Öffnungsstellung bewegbar ist, und wobei als Sperrteil ein an der Fluideinrichtung drehbar gelagerter Drehschieber (33) vorgesehen ist, **dadurch gekennzeichnet, dass** der Drehschieber (33) mindestens einen Anschlußstutzen (37,39) aufweist, der als Bestandteil der Anschlußeinrichtung sich ins Innere des Filtergehäuses (11) erstreckt und dessen Drehbewegung als Mitnehmer auf den Drehschieber (33) überträgt, dass das Filtergehäuse (11) eine Eintrittsöffnung (41) für die Zufuhr von Fluid zur Schmutzseite und eine Austrittsöffnung (43) für den Ausstrom gefilterten Fluids aus dem Filtergehäuse (11) aufweist, dass der Drehschieber (33) für jede Öffnung des Filtergehäuses einen die zuordenbare Öffnung durchgreifenden Anschlußstutzen (37,39) aufweist, dass das Filtergehäuse (11) an Eintrittsöffnung (41) und Austrittsöffnung (43) je ein mittels einer Schließfeder (55,57) in die Schließstellung vorgespanntes, den Fluidaustritt aus dem Filtergehäuse (11) in der Schließstellung sperrendes Ventil (51,53) aufweist, und dass jeder Anschlußstutzen (37,39) des Drehschiebers (33) endseits mindestens eine ins Innere des Filtergehäuses (11) axial vorspringende Steuernase (47) aufweist, die beim Anbringen des Filtergehäuses (11) an der Fluideinrichtung am Sperrkörper (49) des zugeordneten Ventils (51,53) anläuft und dieses gegen die Schließkraft aus der Schließstellung in die Offenstellung drängt.

2. Filtervorrichtung nach Anspruch 1, **dadurch gekennzeichnet, dass** das Filtergehäuse (11) im großen Ganzen die Form eines Kreiszylinders besitzt, der an dem mit der Fluideinrichtung verbindbaren Ende durch ein die Eintrittsöffnung (41) und die Austrittsöffnung (43) aufweisendes Bodenteil (45) und am entgegengesetzten Ende durch ein Deckelteil (23) abgeschlossen ist, und dass an dem das Bodenteil (45) umgebenden Umfangsrand des Gehäuses (11) diametral einander gegenüberliegende, radial vorspringende Bajonettrippen (19) als Bestandteil des Bajonettverschlusses vorgesehen sind, der als weiteres Bestandteil einen Bajonettring (17) aufweist, der an einer Anschlußplatte (9) der Fluideinrichtung befestigt ist und den an der Anschlußplatte (9) drehbar gelagerten Drehschieber (33) umgibt, mittels dessen die in der Anschlußplatte (9) ausgebildeten Fluidanschlüsse (5 und 7) sperrbar und freigebbar sind.

3. Filtervorrichtung nach Anspruch 2, **dadurch gekennzeichnet, dass** die Anschlußplatte (9) durch den Boden eines in einen Hydrauliktank (1) eingebauten Tankabteils (3) gebildet ist, in dem das Filtergehäuse (11) zwischen Boden und einem den Zugang zum Tankabteil (3) ermöglichenden Tankdeckel (15) aufnehmbar ist.

4. Filtervorrichtung nach Anspruch 3, **dadurch gekennzeichnet, dass** der Deckelteil (23) des Filtergehäuses (11) eine axial vorstehende Handhabe (25) für die Durchführung von den Bajonettverschluß (17, 19) betätigenden Drehbewegungen aufweist und dass der zwischen Tanköffnungsstellung und Tankverschlussstellung bewegbare Tankdeckel (15) eine Einbuchtung (27) besitzt, die den Eingriff der Handhabe (25) in der Tankverschlussstellung nur bei der der Verriegelungstellung des Bajonettverschlusses (17, 19) entsprechenden Drehstellung des Filtergehäuses (11) ermöglicht.

## Claims

1. Filter device with at least one filter element (13) that can be received into a filter housing (11), connectable via fluid connections (5, 7) with a fluid system, in particular in the form of a hydraulic tank (1), by means of a connection means (9) in a fluid conveying way, and being disconnectably connectable with the fluid system by means of a fitting means (17, 19), whereby a bayonet closure (17, 19) that can be locked and unlocked by rotating the filter housing (11) is envisaged as a fitting means, whereby the connection means (9) is equipped with at least one moveable blocking part (33) that blocks the relevant associated fluid connection (5, 7) in a blocked position, and releases the same after moving it into an opening position, whereby the blocking part (33) can be moved into the blocked position, e.g. the open position for unlocking and locking the bayonet closure (17, 19) by means of a rotation movement of the filter housing (11), and whereby a rotation flap (33) bearingly affixed to the fluid system is envisaged as a blocking part, **characterised in that** the rotation flap (33) comprises at least one connection stud (37,39) extending into the interior of the filter housing (11) as a component of the connection means, the rotation movement of which is transmitted as a follower onto the rotation flap (33), **in that** the filter housing (11) comprises an inlet opening (41) for the supply of fluid to the dirty side and an outlet opening (43) for the outlet of filtered fluid from the filter housing (11), **in that** the rotation flap (33) comprises a connection stud (37, 39) engaging the associated opening for each opening of the filter housing, **in that** the filter housing (11) comprises a valve (51, 53) each at the inlet opening (41) and the outlet opening (43), blocking the fluid outlet from the filter housing (11) in the closed position by means of a closing spring (55, 57) pre-tensioned towards the closed position, and **in that** each connection stud (37, 39) of the rotation flap (33) comprises at least one control spigot (47) axially projecting into the interior of the filter housing (11) at its end, the same acting on the blocking body (49) of the associated valve (51, 53) during the fitting of the filter housing (11) to the fluid system and forcing the same from the closed position into the open position against the closing force.

2. Filter device according to Claim 1, **characterised in that** the filter housing (11) is mostly shaped in the way of a circular cylinder closed at the end that can be connected with the fluid system by means of a floor part (45) comprising the inlet opening (41) and the outlet opening (43), and at the opposite end by means of a cover part (23), and **in that** diametrically opposing radially projecting bayonet ribs (19) are envisaged as components of the bayonet closure on the circumference edge of the housing (11) surrounding the floor part (45), the same comprising a bayonet ring (17) fitted to a connection plate (9) of the fluid system as a further component and surrounding the rotation flap (33) rotatably affixed to the connection plate (9), with which the fluid connections (5 and 7) formed in the connection plate (9) can be blocked and released.

3. Filter device according to Claim 2, **characterised in that** the connection plate (9) is formed by the floor of a tank section (3) installed into the hydraulic tank (1), into which the filter housing (11) can be received between the floor and a tank cover (3) enabling access to the tank section (3).

4. Filter device according to Claim 3, **characterised in that** the cover part (23) of the filter housing (11) comprises an axially projecting handle (25) for activating the rotation movement of the bayonet closure (17, 19), and **in that** a tank cover (15) moveable between the tank opening position and the tank closing position comprises a recess (27) enabling the engagement of the handle (25) in the tank closing position only in a rotation position of the filter housing (11) equalling the locked position of the bayonet closure (17, 19).

## Revendications

1. Dispositif de filtration comportant au moins un élément filtrant (13) susceptible d'être reçu dans un boîtier de filtre (11) qui peut avoir une liaison conductrice des fluides avec un dispositif de fluide, en particulier sous forme d'un réservoir hydraulique (1), par l'intermédiaire de raccords de fluide (5, 7) à l'aide d'un dispositif de raccordement (9) et qui peut être placé de manière détachable sur le dispositif de fluide à l'aide d'un dispositif de fixation (17, 19), dans lequel
le dispositif de fixation prévu est une fermeture à baïonnette (17, 19) qui peut être détachée et verrouillée en tournant le boîtier de filtre (11),
le dispositif de raccordement (9) est équipé d'au moins une partie de blocage (33) mobile, qui en position de blocage bloque le raccord de fluide (5, 7) susceptible de lui être associé respectivement et qui le libère après être passé dans une position d'ouverture,
la partie de blocage (33) peut passer en position de blocage ou en position d'ouverture en imprimant au boîtier de filtre (11) des mouvements de rotation réalisés pour détacher et verrouiller la fermeture à baïonnette (17, 19) et
la partie de blocage prévue est une vanne rotative (33) montée de façon à pouvoir tourner sur le dispositif de fluide,
**caractérisé en ce que**
la vanne rotative (33) comporte au moins un embout de raccordement (37, 39) qui, partie constitutive du dispositif de raccordement, s'étend à l'intérieur du boîtier de filtre (11) et dont le mouvement de rotation est transmis comme entraîneur à la vanne rotative (33),
le boîtier de filtre (11) comporte une ouverture d'entrée (41) pour acheminer du fluide vers le côté impuretés et une ouverture de sortie (43) pour le courant de fluide filtré qui sort du boîtier de filtre (11),
la vanne rotative (33) pour chaque ouverture du boîtier de filtre comporte un embout de raccordement (37, 39) qui passe dans l'ouverture susceptible d'être associée, à l'ouverture d'entrée (41) et à l'ouverture de sortie (43) le boîtier de filtre (11) comporte respectivement une soupape (51, 53) qui est précontrainte en position de fermeture à l'aide d'un ressort de fermeture (55, 57) et qui empêche que le fluide ne sorte du boîtier de filtre (11) en position de fermeture et
chaque embout de raccordement (37, 39) de la vanne rotative (33) comporte à l'extrémité au moins un bec de commande (47), en saillie axiale à l'intérieur du boîtier de filtre (11), qui, quand le boîtier de filtre (11) est placé sur le dispositif de fluide, avance sur le corps de blocage (49) de la soupape (51, 53) associée et qui la pousse de la position de fermeture en position d'ouverture à l'encontre de la force de fermeture.

2. Dispositif de filtration selon la revendication 1,
**caractérisé en ce que**
le boîtier de filtre (11) a approximativement la forme d'un cylindre circulaire qui à l'extrémité susceptible d'être reliée au dispositif de fluide est fermé par une partie de fond (45) munie de l'ouverture d'entrée (41) et de l'ouverture de sortie (43) et à l'extrémité opposée par une partie de couvercle (23) et
la fermeture à baïonnette a pour partie constitutive des nervures à baïonnette (19), en saillie axiale diamétralement opposées les unes aux autres, prévues sur le bord périphérique - du boîtier (11) - qui entoure la partie de fond (45) et pour autre partie constitutive une bague à baïonnette (17) qui est fixée à une plaque de raccordement (9) du dispositif de fluide et qui entoure la vanne rotative (33), laquelle est montée de façon à pouvoir tourner sur la plaque de raccordement (9) et permet de bloquer et de libérer les raccords de fluide (5 et 7) formés dans la plaque de raccordement (9).

3. Dispositif de filtration selon la revendication 2, **caractérisé en ce que** la plaque de raccordement (9) est formée par le fond d'un compartiment de réservoir (3) qui est monté dans un réservoir hydraulique (1) et dans lequel peut être reçu le boîtier de filtre (11) entre le fond et un couvercle de réservoir (15) qui permet d'avoir accès au compartiment de réservoir (3).

4. Dispositif de filtration selon la revendication 3,
**caractérisé en ce que**
la partie de couvercle (23) du boîtier de filtre (11) comporte une poignée (25) en saillie axiale pour exécuter des mouvements de rotation qui actionnent la fermeture à baïonnette (17, 19) et
le couvercle de réservoir (15) susceptible de passer de la position d'ouverture du réservoir à la position de fermeture du réservoir a une cavité (27) qui permet de saisir la poignée (25) en position de fermeture du réservoir seulement quand le boîtier de filtre (11) est en position de rotation qui correspond à la position où la fermeture à baïonnette (17, 19) est verrouillée.
